# EUROPÄISCHE PATENTSCHRIFT

(11) **EP 2 360 039 B1**
(45) Veröffentlichungstag und Bekanntmachung des Hinweises auf die Patenterteilung: **25.06.2014**
(21) Anmeldenummer: 11151480.8
(22) Anmeldetag: 20.01.2011
(51) Int. Cl.: B60G 17/02, B62K 25/00

(54) **Verfahren zum Einstellen der Federvorspannung einer Radfedereinrichtung eines Motorrads, sowie Motorrad mit einer einstellbaren Radfedereinrichtung**
Method for adjusting the initial spring tension of a wheel suspension of a motorcycle and motorcycle with an adjustable wheel suspension device
Procédé de réglage de la précontrainte d'un ressort d'un dispositif de ressort de roue d'une moto, ainsi que moto dotée d'un dispositif de ressort de roue réglable

(30) Priorität: 11.02.2010 DE 102010007508
(43) Veröffentlichungstag der Anmeldung: 24.08.2011
(73) Patentinhaber: Bayerische Motoren Werke Aktiengesellschaft, 80809 München (DE)
(72) Erfinder: Schmid, Florian, 81667, Muenchen (DE)

(56) Entgegenhaltungen:
- EP-A1- 1 734 277
- DE-A1- 10 029 282
- DE-A1-102008 006 052
- US-A- 4 568 101

## Beschreibung

Die vorliegende Erfindung betrifft ein Verfahren gemäß dem Oberbegriff des Patentanspruches 1 sowie ein Motorrad gemäß dem Oberbegriff des Patentanspruches 2.

Aus der DE 10 2008 006 052 A1 ist ein Verfahren zur Steuerung und/oder Regelung des Feder- und/oder Dämpferverhaltens einer Feder-/Dämpfereinrichtung eines einspurigen Kraftfahrzeugs bekannt, wobei die Radlast oder ein damit korrelierendes Signal ermittelt wird und die Feder-/Dämpfereinrichtung in ihrer Feder- und/oder Dämpfercharakteristik in Abhängigkeit von der Radlast oder einem hiermit korrelierenden Signal eingestellt wird.

Zum technischen Hintergrund der Erfindung zählt ferner die DE 100 29 282 A1.

Verschiedene Motorradmodelle der Marke BMW, wie z. B. die BMW R1200 GS, werden mit elektronisch verstellbaren Federbeinen angeboten. Bei der R 1200 GS ist sowohl an der Hinterradschwinge als auch an der Vorderradgabel eine elektronisch ansteuerbare Radfedereinrichtung vorgesehen, deren Federvorspannung elektronisch verstellbar ist.

Bei der eingangs erwähnten BMW R1200 GS, die ein sehr großes Tankvolumen aufweist, verringert sich bei leerem Tank die Vorderradlast gegenüber dem voll betankten Fahrzeug relativ stark, was sich unmittelbar auf das Fahrverhalten auswirkt. Zwischen leerem und vollem Tank besteht eine Einfederdifferenz des Vorderrades von bis zu ca. 13mm. Durch die sich bei abnehmendem Füllstand reduzierende Vorderradlast und durch die bei den herkömmlichen Fahrzeugen nicht "angepasste" Federvorspannung reduziert sich der Negativfederweg um bis zu 24%. Dies hat zur Folge, dass sich die Stabilität des Fahrzeugs bei abnehmendem Tankfüllstand, insbesondere bei hohen Geschwindigkeiten verringert, und dass die "Fahrerrückmeldung" über das Vorderrad abnimmt, was mit einer sich verschlechternden Radführung einhergeht. Dementsprechend nimmt bei abnehmendem Tankfüllstand die Neigung des Vorderrads zu, beim Beschleunigen abzuheben (wheelie).

Aufgabe der Erfindung ist es, ein Verfahren zum Einstellen der Federvorspannung einer Radfedereinrichtung eines Motorrads, sowie ein Motorrad mit einer derartigen verstellbaren Radfedereinrichtung zu schaffen, das gegenüber den herkömmlichen Systemen noch weiter entwickelt ist.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Das Grundprinzip der Erfindung besteht darin, die Radfedervorspannung (auch) in Abhängigkeit Füllgewichts eines Kraftstofftanks des Motorrads einzustellen.

Ein Motorrad gemäß der Erfindung weist aus Komponentensicht betrachtet mindestens eine Radfedereinrichtung auf, deren Federvorspannung elektrisch bzw. elektronisch gesteuert einstellbar ist, sowie eine Steuerelektronik zur Ansteuerung und Einstellung der Federvorspannung der Radfedereinrichtung. Die betreffende Aktuatorik kann einen elektrischen, elektromagnetischen, hydraulischen oder pneumatischen Aktuator aufweisen. Ferner ist eine Sensorik vorgesehen, welche der Steuerelektronik ein dem "Füllgewicht" des Kraftstofftanks des Motorrads entsprechendes oder damit korrelierendes Signal zuführt.

Der Begriff "Füllgewicht" ist äußerst breit zu interpretieren. Bei dem Füllgewichtssignal handelt es sich ganz allgemein um ein Signal, welches dem Füllzustand bzw. Füllgrad oder auch umgekehrt, dem Entleerungszustand oder dem Entleerungsgrad des Kraftstofftanks entspricht oder zumindest damit korreliert.

Da der Tankinhalt bereits bei heutigen Motorrädern üblicherweise über eine entsprechende Sensorik elektrisch erfasst wird und das betreffende Signal somit vorliegt, kann diese Information in der Steuerelektronik der Radfedereinrichtung verarbeitet werden. Die Steuerelektronik kann dann die Federvorspannung zusätzlich zu der vom Fahrer gewünschten Einstellung in Abhängigkeit vom Tankinhalt anpassen. Es sind keine zusätzlichen Sensoren bzw. Bauteile am Federbein erforderlich. Lediglich das Steuergerät ist hinsichtlich seiner Software entsprechend anzupassen.

Denkbar ist beispielsweise, dass mittels eines Hebelgebers und eines damit zusammenwirkenden Schwimmerelements der Kraftstoffpegel im Kraftstofftank gemessen wird. Alternativ dazu könnte der Kraftstoffpegel auch mittels einer im Inneren des Kraftstofftanks, insbesondere an der Tankinnenseite angeordneten "Sensorfolie" sensiert werden.

Nach der Erfindung ist vorgesehen, dass die Radfedereinrichtung durch die Steuerelektronik gesteuert während der Fahrt verstellbar ist. Dies ist ein ganz wesentlicher Unterschied gegenüber diversen, aus dem Stand der Technik bekannten Verstelleinrichtungen zur Verstellung der Federvorspannung, die rein mechanisch und somit nur bei stehendem Motorrad verstellbar sind.

Vorzugsweise erfolgt die Verstellung der Radfedervorspannung an einer dem Vorderrad des Motorrads zugeordneten Radfedereinrichtung, da der Einfluss des Befüllungsgrads des Tanks am Vorderrad eines Motorrads besonders groß ist. Alternativ oder ergänzend dazu kann aber auch am Hinterrad des Motorrads eine tankfüllstandsabhängige Radfedervorspannungsverstellung vorgesehen sein.

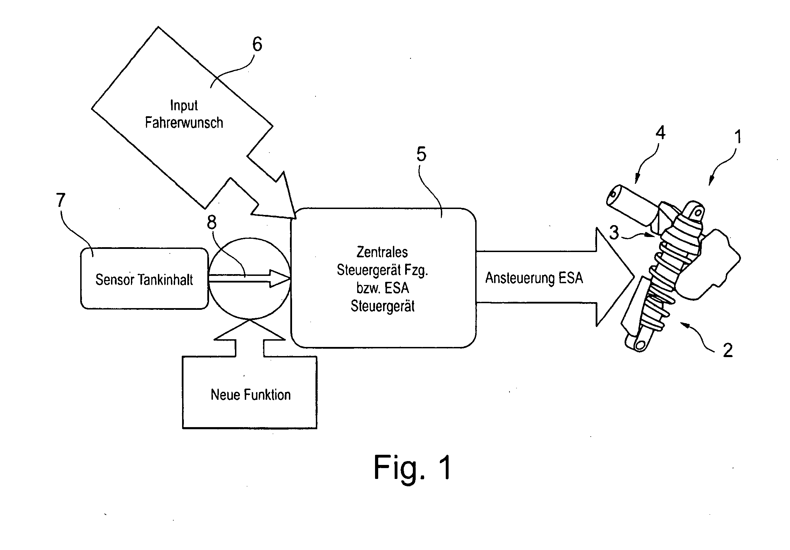

Im Folgenden wird die Erfindung im Zusammenhang mit der Zeichnung näher erläutert. Die einzige Figur 1 zeigt in stark schematisierter Weise das Grundprinzip der Erfindung.

Figur 1 zeigt in Federbein1 eines Motorrads mit einer Radfedereinrichtung 2, deren Federbasis 3 mittels eines elektronisch ansteuerbaren Aktors 4 verstellbar ist. Durch Verstellen der Federbasis 3 kann die Vorspannung der Radfedereinrichtung 2 verändert werden.

Die Ansteuerung des Aktors 4 erfolgt über ein zentrales Fahrzeugsteuergerät oder über ein spezielles Fahrwerksteuergerät 5. Über eine Eingabeeinrichtung 6 kann dem Steuergerät 5 eine Sollfedervorspannung vorgegeben werden. Hierzu kann beispielsweise im Lenkerbereich eine entsprechende Eingabeeinrichtung 6 (z.B. ein Doppeltaster) angeordnet sein.

Ferner kann vorgesehen sein, dass das Steuergerät 5 die Federvorspannung der Radfedereinrichtung 2 in Abhängigkeit einer Vielzahl statischer oder sich während der Fahrt dynamisch ändernder Fahrzeug- bzw. Fahrzustandsparameter steuert oder regelt.

Ferner ist vorgesehen, dass bei der Steuerung bzw. Regelung der Federvorspannung der Radfedereinrichtung 2 auch der Füllgrad bzw. das Füllgewicht bzw. der Entleerungsgrad oder der Entleerungszustand eines Kraftstofftanks des Motorrads berücksichtigt wird. Dementsprechend ist in Figur 1 ein Sensor 7 vorgesehen, welcher der Elektronik 5 ein dem Füllgewicht bzw. Füllzustand des Kraftstofftanks entsprechendes oder zumindest damit korrelierendes Signal 8 zuführt. Bei dem Signal 8 kann es sich insbesondere um ein gefiltertes Signal handeln. Gerade bei Motorrädern unterliegt der Kraftstoffpegel und somit ein entsprechendes Messsignal aufgrund der Fahrzeugbewegungen während der Fahrt starken dynamischen Schwankungen, so dass es von Vorteil ist, das vom Sensor 7 gelieferte Signal zu filtern, um auf diese Weise einen Mittelwert, d. h. ein dem tatsächlichen Füllgrad des Kraftstofftanks möglichst nahe kommendes Signal zu erhalten.

Bei der in Figur 1 gezeigten Radfedereinrichtung 1 kann es sich insbesondere um eine einem hier nicht näher dargestellten Vorderrad eines Motorrads zugeordnete Radfedereinrichtung handeln. Insbesondere bei Motorrädern, bei denen der Kraftstofftank unmittelbar im Bereich hinterhalb des Lenkers bzw. zwischen dem Fahrersitz und dem Lenker angeordnet ist, beeinflusst nämlich der Füllstand des Kraftstofftanks unmittelbar die Fahrdynamik des Fahrzeugs.

## Patentansprüche

1. Verfahren zum Einstellen der Federvorspannung einer Radfedereinrichtung (2) während der Fahrt eines Motorrads,
**dadurch gekennzeichnet, dass** die Radfedervorspannung in Abhängigkeit des Füllgewichts eines Kraftstofftanks des Motorrads eingestellt wird, wobei einer Steuerelektronik ein dem Füllgewicht entsprechendes oder damit korrelierendes Signal von einer Sensorik zugeführt wird.

2. Motorrad, mit einer Radfedereinrichtung (2), deren Federvorspannung verstellbar ist, und einer Steuerelektronik (5) zur Ansteuerung und Einstellung der Federvorspannung der Radfedereinrichtung (2), **dadurch gekennzeichnet, dass**
• eine Sensorik (7) zur Erzeugung eines dem Füllgewicht eines Kraftstofftanks des Fahrzeugs entsprechenden oder damit korrelierenden Signals vorgesehen ist, wobei die Radfedervorspannung von der Steuerelektronik (5) in Abhängigkeit dieses Signals eingestellt ist und
• die Radfedereinrichtung (2) während der Fahrt verstellbar ist.

3. Motorrad nach Anspruch 2, **dadurch gekennzeichnet, dass** die Radfedereinrichtung (2) einem Vorderrad zugeordnet ist.

4. Motorrad nach Anspruch 2, **dadurch gekennzeichnet, dass** die Radfedereinrichtung (2) einem Hinterrad zugeordnet ist.

5. Motorrad nach einem der Ansprüche 2 bis 4, **dadurch gekennzeichnet, dass** die Sensorik (7) einen Hebelgeber mit einem Schwimmerelement aufweist.

6. Motorrad nach einem der Ansprüche 2 bis 5, **dadurch gekennzeichnet, dass** die Sensorik eine im Kraftstofftank, insbesondere an einer Tankinnenseite des Kraftstofftanks angeordnete Sensorfolie aufweist, mittels der der Füllgrad des Kraftstofftanks sensiert wird.

7. Motorrad nach einem der Ansprüche 2 bis 6, **dadurch gekennzeichnet, dass** eine Eingabeeinrichtung (6) vorgesehen ist, über die eine Soll-Federvorspannung vorgebbar ist.

## Claims

1. A device for adjusting the spring prestress on a wheel spring device (2) on a motorcycle while in motion,
**characterised in that** the wheel spring prestress is adjusted in dependence on the weight of the motorcycle tank when full, wherein a signal corresponding to or correlated with the weight when full is supplied by a sensor unit to an electronic control unit.

2. A motorcycle comprising a wheel spring device (2) having an adjustable spring prestress, also comprising an electronic control unit (5) for actuating and adjusting the spring prestress on the wheel spring device (2), **characterised in that**
• a sensor unit (7) is provided for generating a signal corresponding to or correlated with the weight of a vehicle fuel tank when full, wherein the wheel spring prestress is adjusted by the electronic control unit (5) in dependence on the said signal, and
• the wheel spring device (2) is adjustable while in motion.

3. A motorcycle according to claim 2, **characterised in that** the wheel spring device (2) is associated with a front wheel.

4. A motorcycle according to claim 2, **characterised in that** the wheel spring device (2) is associated with a rear wheel.

5. A motorcycle according to any of claims 2 to 4, **characterised in that** the sensor unit (7) comprises a lever sensor with a float element.

6. A motorcycle according to any of claims 2 to 5, **characterised in that** the sensor unit comprises a sensor foil in the fuel tank, especially on an inside wall of the tank, for sensing the extent to which the tank is filled.

7. A motorcycle according to any of claims 2 to 6, **characterised in that** an input device (6) is provided for setting the spring prestress.

## Revendications

1. Procédé de réglage de la précontrainte électrique d'un dispositif de suspension de roue (2) au cours du déplacement d'une motocyclette,
**caractérisé en ce que**
la précontrainte élastique de la roue est réglée en fonction du poids de remplissage du réservoir de carburant de la motocyclette, un signal correspondant au poids de remplissage ou en corrélation avec celui-ci étant transmis par un système de capteurs à une électronique de commande.

2. Motocyclette comprenant un dispositif de suspension de roue (2) dont la précontrainte élastique est réglable ainsi qu'une électronique de commande (5) permettant de commander et de régler la précontrainte élastique du dispositif de suspension de roue (2),
**caractérisée en ce qu'**
il est prévu un système de capteurs (7) permettant de produire un signal correspondant au poids de remplissage du réservoir de carburant ou en corrélation avec celui-ci, la précontrainte élastique de la roue étant réglée par l'électronique de commande (5) en fonction de ce signal, et
le dispositif de suspension de roue (2) peut être réglé pendant le déplacement.

3. Motocyclette conforme à la revendication 2,
**caractérisée en ce que**
le dispositif de suspension de roue (2) est associé à une roue avant.

4. Motocyclette conforme à la revendication 2,
**caractérisée en ce que**
le dispositif de suspension de roue (2) est associé à une roue arrière.

5. Motocyclette conforme à l'une des revendications 2 à 4,
**caractérisée en ce que**
le système de capteurs (7) comporte un détecteur de niveau équipé d'un flotteur.

6. Motocyclette conforme à l'une des revendications 2 à 5,
**caractérisée en ce que**
le système de capteurs comporte un film détecteur monté dans le réservoir de carburant, en particulier sur une face interne de ce réservoir de carburant, et au moyen duquel le degré de remplissage du réservoir de carburant est détecté.

7. Motocyclette conforme à l'une des revendications 2 à 6,
**caractérisée en ce qu'**
il est prévu un dispositif d'entrée (6) permettant de prédéfinir une précontrainte élastique de consigne.
